# EUROPÄISCHE PATENTANMELDUNG

(11) **EP 1 020 224 A1**
(43) Veröffentlichungstag der Anmeldung: **19.07.2000**
(21) Anmeldenummer: 99630004.2
(22) Anmeldetag: 04.01.1999
(51) Int. Cl.: B03B 9/06, B07B 9/02

(54) **Verfahren und Vorrichtung zur Aufbereitung von Abfällen mit mehrstufiger Sichtungsabtrennung von Leichtfraktionen aus getrocknetem Material**

(71) Anmelder: R.S.T. Luxembourg S.A., 1930 Luxemburg (LU)
(72) Erfinder: Schmidt, Hans, 38704 Liebenburg (DE)
(74) Vertreter: Weydert, Robert

(57) **Zusammenfassung**

Zur Separation von organischen Leichtfraktionen aus Abfällen, die zuvor einer Vorbehandlung bestehend aus Vorzerkleinerung (2), Fe-Metallabscheidung (3), Nachzerkleinerung (4), weiterer Fe-Metallabscheidung (5), Trocknung (6) und NE-Metallabscheidung (7) unterzogen werden, werden mehrere vorzugsweise sogenannte vertikale Zick-Zackluftsichter (23,30,37) kaskadenartig gestuft angeordnet und vom aufzutrennenden Materialstrom hintereinander durchlaufen.

Die Luft-Aufstromgeschwindigkeit wird in den einzelnen Sichtern gestuft derart eingestellt, daß der erste Sichter (23) die kleinste und der letzte Sichter (37) die größte Luftgeschwindigkeit erhält. Dadurch werden der Reihe nach zuerst die feinen (15), danach die mittleren (16) und zuletzt die groben Organik-Leichtfraktionen (17) aus den jeweiligen Sichterstufen nach oben ausgetragen. Die separierten Organik-Leichtfraktionen (15,16,17) stellen heizwertreiche Brennstoffkomponenten dar.

Der verbleibende Untenaustrag aus der Sichtergruppe besteht aus einem Gemisch von Organik-Schwerfraktionen (18) und Mineralien (19). Dieses Stoffgemisch wird mittels einer ballistischen Dichtetrennung (11) in Organik-Schwerfraktion (18) und Mineralien (19) aufgetrennt. Die Organik-Schwerfraktion (18) stellt ebenfalls eine heizwertreiche Brennstoffkomponente dar.

Die im Gesamtverfahren anfallenden nicht brennbaren Stoffgruppen, wie Fe-Metalle, NE-Metalle, Wasser und Mineralien sind als Recycling-Rohstoffe einsetzbar.

## Beschreibung

Die vorliegende Erfindung betrifft ein Verfahren zur Aufbereitung von Abfällen mit mehrstufiger Sichtungsabtrennung von Leichtfraktionen aus getrocknetem Material, sowie eine Vorrichtung zur Durchführung des Verfahrens.

Organische Stoffgruppen in Abfällen sind heizwertreiche Fraktionen, die zur Gewinnung von Brennstoffen geeignet sind. Die organischen Stoffgruppen bestehen im wesentlichen aus leichten (flugfähigen) und schweren (granulatartigen) Fraktionen, die sich je nach Abfallherkunft und Verwendungsziel wiederum in grobe (ca.> 10mm), feine (ca.2 - 10mm) und feinste (< 2 mm) unterteilen lassen.

Zur Gewinnung von schadstoffentfrachteten, also möglichst sauberen Brennstoffen aus Abfällen, ist es erforderlich, die Abfälle nach einer geeigneten Vorbehandlung stoffgruppenspezifisch aufzutrennen und die organischen heizwertreichen Fraktionen abzuscheiden. Das erfolgt üblicherweise mit Sichtungseinrichtungen.

Verfahren dieser Art sind beispielsweise beschrieben in
DE - PS 31 05 597
FP - PS 02 43 747 B1
US - PS 4, 623, 515
US - PS 4, 815, 668.

Die bekannten Verfahren erfordern zur Abtrennung der leichten Organikfraktionen eine Kombination von vorgeschalteter Siebung vor der Sichtung, um eine ausreichende Trennschärfe zwischen leichten und schweren Partikeln durch Sichtung von unterteilten Korngrößengruppen zu erzielen. Eine Sichtung aller Korngrößen zusammen ergibt unzureichende Trennschärfen. Diese kombinierte Verfahrensweise ist relativ aufwendig und erfordert zur technischen Durchführung einen hohen Installationsaufwand.

Der Erfindung liegt die Aufgabe zugrunde, die beschriebenen Nachteile des hohen technischen Aufwandes für die Sichtungsabtrennung von Leichtfraktionen aus Abfallgemischen zu vermeiden und den Sichtungsprozeß zu vereinfachen.

Diese Aufgabe wird erfindungsgemäß dadurch gelöst, daß das zu sichtende Material den Vorbehandlungsschritten Vorzerkleinerung, Fe-Metallabscheidung, Nachzerkleinerung, Trocknung unterzogen und anschließend in zwei oder mehrere kaskadenförmig hintereinander angeordnete Luft-Sichterstufen geleitet wird und diese der Reihe nach durchläuft.

Die Luftgeschwindigkeiten der einzelnen Sichterstufen sind getrennt einstellbar, so daß zweckmäßigerweise die erste Sichterstufe die kleinste und die letzte Sichterstufe die größte Luftgeschwindigkeit erhalten. Durch diese Anordnung und Einstellung der Aggregate ist es möglich, beim Durchlauf des Materials durch die Sichterstufen der Reihe nach zuerst die feinen und in den weiteren Stufen die jeweils groberen Leichtfraktionen abzuscheiden.

Die schweren, nicht flugfähigen und granulatartigen Materialfraktionen durchlaufen alle Sichterstufen nach unten und werden dort ausgetragen. Sie werden einer weiteren Dichtetrennung unterzogen und in heizwertreiche Organikfraktion und anorganische Mineralfraktion aufgetrennt.

Die Erfindung wird an einem Ausführungsbeispiel durch die nachstehenden Ausführungen in Verbindung mit einer Fließschema-Zeichnung näher erläutert.

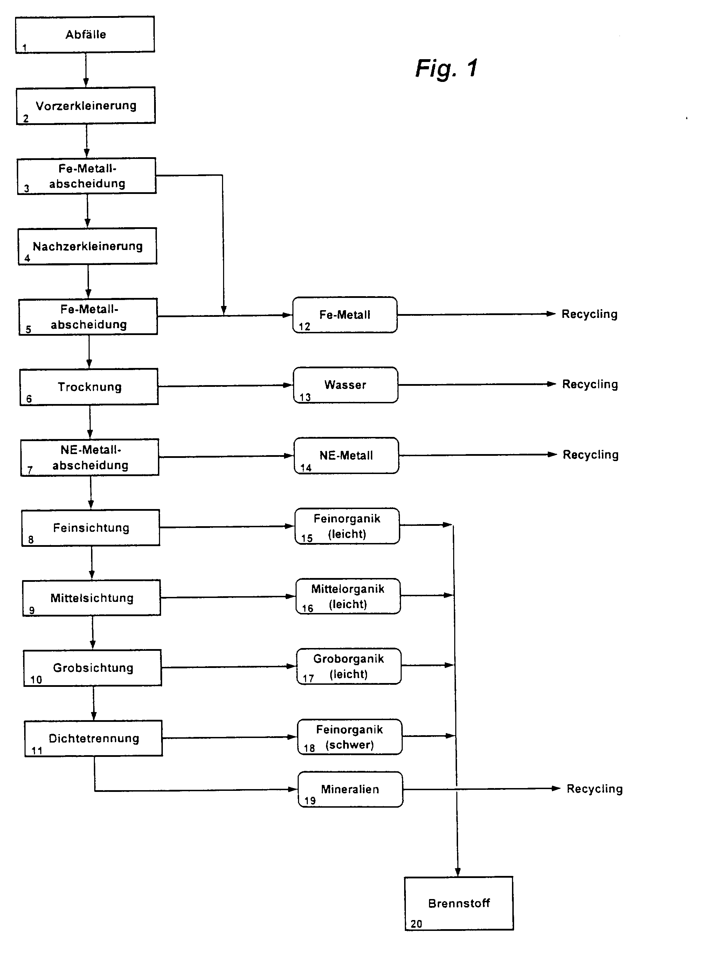

In Fig.1 wird die Integration der mehrstufigen Sichtungsabtrennung von Leichtfraktionen aus vorbehandeltem, getrocknetem Abfallmaterial dargestellt. Dabei werden die Abfälle (1) zur Vorbereitung der Sichtung den Vorbehandlungsschritten Vorzerkleinerung auf ca.80mm(2), Fe-Metallabscheidung (3), Nachzerkleinerung auf ca.40mm (4), zweite Fe-Metallabscheidung (5), Trocknung (6) und NE-Metallabscheidung unterzogen.

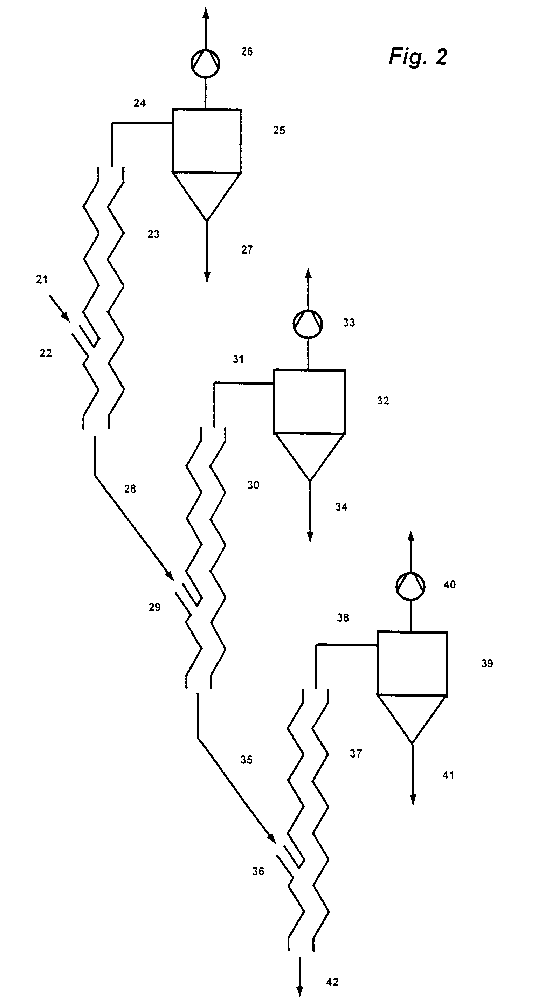

Das so vorbereitete Material (21) wird nun ohne die allgemein übliche und aufwendige Mehrfachsiebung mit seinem ganzen Körnungsband von 0 bis ca.40mm in die in Fig.2 dargestellten erfindungsgemäßen kaskadenförmig angeordneten Sichterstufen (23, 30, 37) an der Einlaßöffnung (22) des ersten Sichters (23) aufgegeben. Als Sichter kommen vorzugsweise handelsübliche Sichter zur Anwendung, deren Funktionsweise und Trennwirkung allgemein bekannt ist.

Durch die Saugventilatoren (26, 33, 40) wird Über die Zyklone (26, 33) und die Saugleitungen (24, 31, 38) in den Sichtern eine einstellbare Luftgeschwindigkeit erzeugt, die jeweils so eingestellt wird, daß im ersten Sichter (23) die feinen flugfähigen Partikel im Körnungsbereich 0 - 2mm nach oben abgetrennt und über den Saugkanal (24), den Zyklon (25) und den Auslaß (27) ausgetragen werden. Die nach oben ausgetragene feine Leichtfraktion (15) besteht aus organischen Stoffgruppen und stellt eine heizwertreiche Brennstoffkomponente dar.
Das aus dem ersten Sichter (23) nach unten ausfallende Material (28) beeinhaltet alle schweren Stoffe und auch noch Leichtfraktionen mit größerer Körnung als ca. 2mm.

Der Materialstrom (28) wird in die Einlaßöffnung (29) des zweiten Sichters (30) aufgegeben. Im zweiten Sichter (30) wird die Luftgeschwindigkeit um so viel hoher eingestellt-, daß die mittelgroßen flugfähigen Partikel mit einer Körnung von ca. 2 - 10mm nach oben abgetrennt und über die Saugleitung (31), den Zyklon (32) und den Auslaß (34) ausgetragen werden. Die nach oben ausgetragene mittlere Leichtfraktion (16) besteht aus organischen Stoffgruppen und stellt eine heizwertreiche Brennstoffkomponente dar.

Das aus dem zweiten Sichter (30) nach unten ausfallende Material (35) beinhaltet alle schweren Stoffe und auch noch Leichtfraktionen mit größerer Körnung als ca. 10mm.

Der Materialstrom (35) wird in die Einlaßöffnung (36) des dritten Sichters (37) aufgegeben. Im dritten Sichter (37) wird die Luftgeschwindigkeit so hoch eingestellt, daß die großen flugfähigen Partikel mit einer Körnung > ca.10mm nach oben abgetrennt und über die Saugleitung (38) und den Zyklon (39) und den Auslaß (41) ausgetragen werden.
Die nach oben ausgetragene grobe Leichtfraktion (17) besteht aus organischen Stoffgruppen und stellt eine heizwertreiche Brennstoffkomponente dar.

Der aus dem dritten Sichter (37) nach unten austretende restliche Materialstrom (42) besteht schließlich nur noch aus schweren granulatartigen Stoffen, wie organischen Hartstoffen mit einer Dichte von ca. 1,2 - 2,0 g/cm³ und Mineralien mit einer Dichte von ca. 2,0 - 3,5 g/cm³.
Der schwere granulatartige Materialstrom (42) wird anschließend mittels einer an sich bekannten ballistischen Dichtetrennung (11) mit einem Dichteschnitt von ca. 2,0 g/cm3 in organische Schwerstoffe (18) und die noch schwereren Mineralien (19) aufgetrennt.

Die abgetrennten organischen Schwerstoffe (18) stellen ebenfalls eine heizwertreiche Brennstoffkomponente dar.

Die gewonnenen heizwertreichen Brennstoffkomponenten, bestehend aus der feinen organischen Leichtfraktion mit einer Körnung von 0 bis ca.2mm (15), der mittleren Organik-Leichtfraktion mit einer Körnung von ca.2 - 10mm (16), der groben Organik-Leichtfraktion mit einer Körnung von > ca.10mm (17) und der Organik-Schwerfraktion (18), stehen einer thermischen Verwertung, wie Industriefeuerung, Pyrolyse, Thermolyse, Entgasung/Vergasung usw. als schadstoffentfrachteter und relativ sauberer sowie lager- und transportfähiger Brennstoff zur Verfügung.

Die anderen separierten Stoffgruppen wie Fe-Metalle (12), NE-Metalle(14), Wasser (13) und Mineralien (19) sind als Recycling-Rohstoffe in Industrieprozessen einsetzbar.

Die mit der Erfindung erzielten Vorteile liegen insbesondere darin, daß durch die kaskadenartig gestufte Sichteranordnung die organischen Leichtfraktionen sequentiell nach ihren Gewichtsklassen aus dem Stoffgemisch von vorbehandelten und getrockneten Abfällen mit hoher Trennschärfe und unter Vermeidung vorgeschalteter Siebungsstufen gewonnen werden.

## Patentansprüche

1. Verfahren zur Aufbereitung von Abfällen mit mehrstufiger Sichtungsabtrennung von Leichtfraktionen aus getrocknetem Material, bei welchem die Abfälle einer Vorbehandlung durch Vorzerkleinerung, Fe-Metallabscheidung, Trocknung und NE-Metallabscheidung unterzogen werden, dadurch gekennzeichnet, daß das vorbehandelte Material mehrere kaskadenartig hintereinander angeordnete Luft-Sichter nacheinander durchläuft und dabei durch unterschiedlich hohe Luftgeschwindigkeiten der Reihe nach zuerst die feinen, danach die mittleren und zuletzt die groben flugfähigen Leichtfraktionen abgetrennt werden.

2. Verfahren nach Anspruch 1, dadurch gekennzeichet, daß man die Luftgeschwindigkeiten in vorzugsweise drei hintereinander angeordneten Luftsichtern so unterschiedlich einstellt, daß im ersten Luftsichter nur Leichtfraktionen mit einer Körnung von 0 bis ca.2mm, im zweiten Luftsichter nur Leichfraktionen mit einer Körnung von ca. 2 bis 10mm und im dritten Luftsichter die restliche Leichtfraktion mit einer Körnung von > ca. 10mm nach oben ausgetragen werden.

3. Verfahren nach Anspruch 1 oder 2, dadurch gekennzeichnet, daß das aus den hintereinander angeordneten Luftsichtern unten ausfallende Material jeweils in den nachfolgenden Luftsichter als Aufgabegut zur weiteren Abtrennung der jeweils flugfähigen Leichtfraktion eingespeist wird.

4. Verfahren nach Anspruch 1 bis 3, dadurch gekennzeichnet, daß das aus dem letzten Luftsichter unten ausfallende Schwergut nachfolgend mit einer ballistischen Dichtetrennung bei einem Dichteschnitt von ca. 2,0g/cm³ behandelt, und dabei die Mineralien von dem leichteren Schwergut abgetrennt werden.

5. Vorrichtung zur DurchfUhrung des Verfahrens nach Anspruch 1 bis 4, dadurch gekennzeichnet, daß die Sichterstufen derart angeordnet sind, daß der untere Schwerstoff-Auslaß der Sichter mit dem Aufgabegut-Einlaß des jeweiligen nachgeordneten Sichters verbunden ist und dadurch eine kaskadenartig gestufte Anordnung der Sichter zustande kommt.
